# EUROPÄISCHE PATENTSCHRIFT

(11) **EP 2 571 619 B1**
(45) Veröffentlichungstag und Bekanntmachung des Hinweises auf die Patenterteilung: **27.09.2017**
(21) Anmeldenummer: 11720471.9
(22) Anmeldetag: 18.05.2011
(51) Int. Cl.: B01L 3/14, G01N 35/04

(54) **VORRICHTUNG ZUM AUTOMATISIERTEN ÖFFNEN VON FLIPTUBES**
DEVICE FOR AUTOMATED OPENING OF FLIP-TOP TUBES
DISPOSITIF POUR L'OUVERTURE AUTOMATISÉE DE FLIPTUBES

(30) Priorität: 19.05.2010 DE 102010029136
(43) Veröffentlichungstag der Anmeldung: 27.03.2013
(73) Patentinhaber: Hamilton Bonaduz AG, 7402 Bonaduz (CH)
(72) Erfinder: KÜBLER, Walter, CH-9442 Berneck (CH); BECKBISSINGER, Rainer, CH-7013 Domat/Ems (CH); MÜLLER, Urs, CH-7215 Fanas (CH)
(74) Vertreter: RLTG
(86) Internationale Anmeldenummer: PCT/EP2011/058041
(87) Internationale Veröffentlichungsnummer: WO 2011/144658

(56) Entgegenhaltungen:
- EP-A1- 2 168 683
- WO-A2-2005/029094
- DE-A1-102009 020 811
- US-A- 5 358 691

## Beschreibung

Die vorliegende Anmeldung betrifft eine Baugruppe mit einer Werkzeugvorrichtung zum automatisierten Öffnen von Fliptubes sowie mit wenigstens einer Behälterbaugruppe, welche wenigstens eine Fliptube umfasst.

Mit dem Begriff "Fliptubes" sind auf dem einschlägigen technischen Gebiet wohlbekannte labortechnische Behälter zum Aufbewahren von Flüssigkeiten bezeichnet, bei welchen ein Behälterinnenraum eines Behältergrundkörpers durch eine Behälteröffnung zugänglich ist.

Die Behälteröffnung ist durch einen Behälterdeckel wahlweise verschließbar, welcher zwischen einer Öffnungsstellung, in der der Behälterinnenraum durch die Behälteröffnung zugänglich ist, und einer Schließstellung, in der die Behälteröffnung durch den Behälterdeckel verschlossen ist, um eine Deckelschwenkachse verschwenkbar ist. Der Behälterdeckel weist dabei auf einer Seite der Deckelschwenkachse einen die Behälteröffnung wahlweise freigebenden oder verschließenden Deckelabschnitt und auf der jeweils anderen Seite der Deckelschwenkachse einen zur gemeinsamen Bewegung mit dem Deckelabschnitt verbundenen Betätigungsabschnitt auf. Die Betätigung des Betätigungsabschnitts in einer Öffnungsrichtung bewirkt eine Verschwenkung des Deckelabschnitts von einer der Schließstellung näheren Position, vorzugsweise von der Schließstellung selbst, zu einer der Öffnungssstellung näheren Position, vorzugsweise in die Öffnungsstellung selbst. Derartige Fliptubes sind in der Labortechnik für die Aufbewahrung von Flüssigkeiten besonders geschätzt, die für eine Dosierung durch Pipettieren bereitgestellt werden sollen. Die besondere Wertschätzung der Fliptubes ist durch die Verschließbarkeit des Behälterinnenraums begründet, wodurch eine darin aufgenommene Flüssigkeit für die Dauer des Verschlusses der Fliptube gegen Einflüsse von außen weitestgehend geschützt ist.

Allerdings ist der Einsatz von Fliptubes aufgrund ihrer Verschließbarkeit auch von Schwierigkeiten begleitet: So ist der Deckelabschnitt zu seiner Positionssicherung in der Schließstellung häufig mit dem Behältergrundkörper verrastet, weshalb zum Öffnen einer Fliptube eine nennenswerte Kraft aufgewendet werden muss, um die Verrastung des Deckelabschnitts in der Schließstellung zu überwinden.

Zwar wurde eigens der oben beschriebene Betätigungsabschnitt an einer abseits der Behälteröffnung liegenden Stelle vorgesehen, um die Fliptube öffnen zu können, ohne dass ein Labormitarbeiter mit der Hand oder einem Werkzeug den Behältergrundkörper oder den Deckelabschnitt unmittelbar an der Behälteröffnung angreifen muss. Jedoch geschieht das Öffnen der Fliptube meist schlagartig, wodurch es zu einem unerwünschten Schütteln oder sogar Verschütten der im Behälterinnenraum aufgenommenen Flüssigkeit kommen kann.

Dieser unerwünschte Effekt kann noch durch den Ausgleich eines Unterdrucks einer im Behälterraum über der darin aufgenommenen Flüssigkeit vorhandenen Gassäule unterstützt werden, welcher sich während des Überwindens der Verrastung aufbauen kann, etwa wenn der Deckelabschnitt im Sinne einer Vergrößerung des Volumens des Behälterinnenraums bewegt wird, ohne sich zunächst vom Behältergrundkörper zu lösen. Dieser Unterdruck wird dann, wenn sich der Deckelabschnitt vom Behältergrundkörper zu lösen beginnt, schlagartig abgebaut, so dass ein plötzlich von außen in den Behälterinnenraum einströmendes Gas für eine zusätzliche unerwünschte Verwirbelung der in der Fliptube bereitgestellten Flüssigkeit sorgt.

Aus der WO 2005/029094 A2 ist eine Baugruppe aus Werkzeugvorrichtung und Fliptube bekannt, bei welcher die Werkzeugvorrichtung eine schwenkbare Platte aufweist, welche mit dem Deckelbehälter durch elastische Krallen verrastbar ist.

Mittels einer Kolben-Zylinder-Anordnung ist die Platte mit einem Betätigungsarm auf den Behälterdeckel einer zu öffnenden Fliptube absenkbar, um die Platte mit dem Behälterdeckel zu verrasten, der hierfür eigens Vorsprünge aufweisen muss.

Die gesonderte und verrastbare Platte weist bezüglich ihrer Plattenschwenkachse auf einer Seite die Verrastungskrallen auf und weist bezüglich der Plattenschwenkachse auf der anderen Seite eine Steuerungskontur auf, welche derart mit dem Betätigungsarm zusammenwirkt, dass der Betätigungsarm durch horizontale Verlagerung längs der Plattenoberfläche im Sinne einer mechanischen Zwangssteuerung gegen die Steuerungskontur der Platte bewegt wird und so eine Verschwenkung der Platte um die Plattenschwenkachse erzwingt. Da die Platte zu diesem Zeitpunkt mit dem darunterliegenden Behälter einer Fliptube verrastet ist, wird mit der Schwenkbewegung der Platte auch der Behälterdeckel verschwenkt und somit die Fliptube geöffnet.

Der Betätigungsarm dient somit in der vertikalen Bewegung der Unterstützung der Verrastung der Platte mit dem Deckel und bei vertikaler Bewegung von der Verrastungsseite hin zur Steuerungskontur der Erzwingung einer Schwenkbewegung der Platte.

Es ist daher Aufgabe der vorliegenden Erfindung, die Handhabung von Fliptubes, insbesondere ihr sicheres Öffnen und Schließen, zu erleichtern.

Diese Aufgabe wird gelöst durch eine Baugruppe mit allen Merkmalen des Anspruchs 1. Diese umfasst eine Werkzeugvorrichtung zum automatisierten Öffnen von Fliptubes, welche einen Betätigungsstempel aufweist, der zur Verlagerung des Betätigungsabschnitts der Fliptube wenigstens in Öffnungsrichtung und dadurch zur Ausübung eines Öffnungsmomentes auf den Deckelabschnitt vorgesehen und ausgebildet ist, und welche weiter eine Dämpfungseinrichtung aufweist, die dazu ausgebildet ist, wenigstens während eines Abschnitts der Betätigung des Betätigungsabschnitts durch den Betätigungsstempel ein Dämpfungsmoment auf den Deckelabschnitt auszuüben, welches verglichen mit dem Öffnungsmoment betragsmäßig geringer und entgegengesetzt gerichtet ist.

Durch den Betätigungsstempel kann ein Öffnungsmoment, also ein Drehmoment in Öffnungsrichtung, unmittelbar auf den Betätigungsabschnitt und damit mittelbar auf den Deckelabschnitt ausgeübt werden, so dass der Behälterdeckel und damit insbesondere der Deckelabschnitt von der Behälteröffnung entfernt werden können, um den Zugang zum Behälterinnenraum durch die Behälteröffnung freizugeben. Aufgrund des Betätigungsstempels kann dieses Öffnen der Fliptube geschehen, ohne dass der Behältergrundkörper oder der Behälterdeckel im Bereich der Behälteröffnung von einer Bedienperson angefasst werden müsste. Vielmehr kann die Werkzeugvorrichtung von einem automatisierten Bediengerät, etwa einem Roboter, geführt werden, wodurch sich eine Bedienperson beim Öffnen der Fliptube nicht mehr in der Nähe derselben aufhalten muss. Dadurch wird das Verschmutzungsrisiko des Behälterinnenraums verringert. Wenngleich dies nicht bevorzugt ist, so ist dennoch grundsätzlich nicht ausgeschlossen, dass die Werkzeugvorrichtung manuell von einer Bedienperson benutzt wird.

Durch die weiter vorgesehene Dämpfungseinrichtung kann das auf den Deckelabschnitt einwirkende Öffnungsmoment um ein Dämpfungsmoment gezielt verringert werden, so dass ein plötzliches, schlagartiges Freigeben der Behälteröffnung vermieden werden kann. Dadurch, dass das Dämpfungsmoment verglichen mit dem Öffnungsmoment betragsmäßig geringer und entgegengesetzt gerichtet ist, ist sichergestellt, dass das Öffnen der Fliptube mit der hier beschriebenen Werkzeugvorrichtung erreicht werden kann.

Dabei muss die Dämpfungseinrichtung nicht über die gesamte Öffnungsbewegung des Behälterdeckels hinweg aktiv sein. Ebenso wenig muss die Dämpfungseinrichtung von Beginn des Öffnungsvorgangs an auf den Behälterdeckel einwirken, wenngleich dies bevorzugt ist.

So kann es für ein zügiges Überwinden einer möglichen und in der Regel auch vorhandenen Verrastung des Deckelabschnitts in der Schließstellung hilfreich sein, wenn zunächst das Öffnungsmoment betragsmäßig voll auf den Behälterdeckel einwirkt und die Dämpfungseinrichtung erst kurz vor dem endgültigen Überwinden der Verrastung des Behälterdeckels aktiviert wird, um das oben beschriebene unerwünschte schlagartige Öffnen der Fliptube möglichst zu vermeiden.

Der Deckelabschnitt ist in der Regel mit einer größeren möglichen Anlagefläche als der Betätigungsabschnitt ausgebildet und reicht insbesondere zu einer radial weiter von der Deckelschwenkachse entfernt gelegenen Stelle, so dass ein erfindungsgemäßer Kraftangriff der Dämpfungseinrichtung unmittelbar am Deckelabschnitt zu einem sehr fein dosierbaren Dämpfungsmoment führen kann, wenn man den zur Verfügung stehenden größeren Lastarm des Deckelabschnitts ausnutzt.

Das Vorsehen der Dämpfungseinrichtung kann überdies die Bewegungssteuerung eines die Werkzeugvorrichtung führenden, vorzugsweise automatisierten Handhabungsgeräts vereinfachen, das ansonsten bei Wegfall der Dämpfungseinrichtung über die Bewegungssteuerung des Betätigungsstempels die Feinsteuerung des Öffnungsmomentes übernehmen müsste, was insbesondere angesichts des in der Regel kurzen Lastarms des Betätigungsabschnitts mit sehr großem Aufwand verbunden wäre. Außerdem reicht es durch Vorsehen einer gesondert vom Betätigungsstempel vorgesehenen Dämpfungseinrichtung aus, wenn Betätigungsstempel oder/und Dämpfungseinrichtung lediglich zum besonders einfach zu realisierenden Anlageeingriff mit einem jeweils zugeordneten Abschnitt des Behälterdeckels ausgebildet sind.

Eine konstruktiv einfache und daher bevorzugte Ausgestaltung der Dämpfungseinrichtung zur Ausübung eines Dämpfungsmoments auf den Deckelabschnitt kann also dadurch gebildet werden, dass die Dämpfungseinrichtung eine zum Anlageeingriff mit dem Deckelabschnitt ausgebildete Anlageanordnung aufweist, welche verlagerbar ist zwischen einer Dämpfungsanfangsstellung, die einer der Schließstellung näheren Position des Deckelabschnitts zugeordnet ist, und einer Dämpfungsendstellung, die einer der Öffnungsstellung näheren Position des Deckelabschnitts zugeordnet ist.

Grundsätzlich kann die Dämpfungswirkung der Anlageanordnung durch Schwerkraftwirkung eines Bauteils der Anlageanordnung oder der gesamten Anlageanordnung bewirkt werden.

Die Dämpfungswirkung der Dämpfungseinrichtung, also das von ihr auf den Behälterdeckel, insbesondere auf den Deckelabschnitt, ausgeübte Dämpfungsmoment lässt sich jedoch dadurch in wesentlich größerem Umfang oder/und wesentlich genauer einstellen, dass die Anlageanordnung mit einem Kraftgerät derart zusammenwirkt, dass sie zumindest abschnittsweise gegen eine Kraftwirkung des Kraftgeräts von der Dämpfungsanfangsstellung in die Dämpfungsendstellung verlagerbar ist. Ein bevorzugtes Kraftgerät, das eine wohl dosierte Dämpfungswirkung gestattet und nur wenig Bauraum beansprucht, ist eine Federeinrichtung, sei es als Schraubenfeder, Spiralfeder, Elastomer- oder Polymerfeder.

Zwar reicht es zur Erzielung der gewünschten Dämpfungswirkung aus, wenn die Anlageanordnung nur in einem vorbestimmten Bewegungsabschnitt der Anlageanordnung und damit des Behälterdeckels gegen die Kraftwirkung des Kraftgeräts verlagerbar ist. Bevorzugt ist die Anlageanordnung jedoch längs ihres vollständigen Bewegungswegs von der Dämpfungsanfangsstellung in die Dämpfungsendstellung gegen die Kraftwirkung des Kraftgeräts verlagerbar, um eine unerwünschte ruckartige Bewegung des Behälterdeckels in jeder Deckelstellung zu vermeiden. Außerdem kann durch das Zusammenwirken von Kraftgerät und Anlageanordnung eine Vorspannung des letzteren zur Dämpfungsanfangsstellung hin erreicht werden.

Grundsätzlich kann daran gedacht sein, dass die Anlageanordnung translatorisch längs einer geradlinigen Bewegungsbahn zwischen der Dämpfungsanfangsstellung und der Dämpfungsendstellung bewegbar ist, etwa unter Verwendung eines unmittelbar zum Anlageeingriff mit dem Deckelabschnitt ausgebildeten Anlagekolbens, welcher beispielsweise durch eine Druckfeder, etwa eine Schraubenfeder, als dem Kraftgerät zum Anlageeingriff hin vorgespannt sein kann. Dadurch kann eine sehr schlanke Anlageanordnung erhalten werden, welche allerdings längs der translatorischen Bewegungsbahn einen erheblichen Bauraum beanspruchen könnte, etwa um den Federweg der Druckfeder bereitzustellen. Weiterhin sollte ein derartiger Anlagekolben eine qualitativ hochwertige Führung besitzen, um etwa Fehlfunktionen der Werkzeugvorrichtung aufgrund von Stick-Slip-Effekten des Anlagekolbens zu vermeiden.

Da jedoch der Behälterdeckel selbst um eine Deckelschwenkachse verschwenkbar ist, ist es bevorzugt, dass die Anlageanordnung um eine Anlageschwenkachse zwischen der Dämpfungsanfangsstellung und der Dämpfungsendstellung verschwenkbar ist. In diesem Falle kann selbst dann, wenn Anlageschwenkachse und Deckelschwenkachse auseinanderfallen sollten, durch Gestatten eines gleitenden Anlageeingriffs zwischen der Anlageanordnung und dem Deckelabschnitt die Anlageanordnung der Bewegung des Behälterdeckels von einer der Schließstellung näheren Position zu einer der Öffnungsstellung näheren Position hin über einen langen Bewegungsabschnitt hinweg folgen und ihre Dämpfungswirkung bereitstellen.

Zur Erleichterung der der Behälterdeckelbewegung folgenden Schwenkbewegung der Anlageanordnung ist bevorzugt vorgesehen, dass Anlageschwenkachse und die Deckelschwenkachse im Wesentlichen parallel sind. Dadurch kann die Werkzeugvorrichtung mit sehr geringem Bauraumbedarf realisiert werden, ohne dass ein Verklemmen der zumindest vorübergehend in Anlageeingriff mit dem Behälterdeckel befindlichen Anlageanordnung zu befürchten ist.

Zur Bereitstellung einer möglichst feinen Einstellbarkeit des von der Dämpfungseinrichtung bereitgestellten Dämfungsmoments oder/und zur bauraumschonenden entfernten Anordnung des Kraftgeräts mit Abstand von der Anlageanordnung kann vorgesehen sein, dass die Anlageanordnung mittels eines Getriebes mit dem Kraftgerät verbunden ist. Als Getriebe im Sinne dieser Weiterbildung der vorliegenden Erfindung wird jedes System von in Kraftübertragungsbeziehung zueinander angeordneten Bauteilen verstanden. Als besonders vorteilhaftes Getriebe hat sich insbesondere für die schwenkbare Anlageanordnung ein Kniegelenkgestänge erwiesen. Dann kann weiterhin einer der Lenker des Kniegelenkgestänges mit einer Federeinrichtung, vorzugsweise mit einer bauraumsparenden Torsionsfedereinrichtung, als dem Kraftgerät gekoppelt sein, wodurch schließlich die Anlageanordnung zum Anlageeingriff mit dem Behälterdeckel hin vorgespannt sein kann.

Um zu verhindern, dass die Dämpfungseinrichtung dann, wenn beispielsweise der Betätigungsstempel aufgehört hat, auf den Betätigungsabschnitt des Behälterdeckels der Fliptube einzuwirken, ein in Schließrichtung wirkendes Dämpfungsmoment auf den Behälterdeckel ausübt, ohne dass diesem ein betragsmäßig größeres Öffnungsmoment entgegenwirkt, also um ein unerwünschtes Schließen des Behälterdeckels nach dem Öffnen zu vermeiden, ist vorzugsweise vorgesehen, dass die Anlageanordnung wenigstens in ihrer Dämpfungsendstellung festlegbar, vorzugsweise verrastbar, besonders bevorzugt überwindbar verrastbar ist. Aus Sicherheitsgründen ist dabei bevorzugt an eine formschlüssige Festlegung gedacht.

Die vorteilhafte Festlegbarkeit der Anlageanordnung in der Dämpfungsendstellung kann konstruktiv dadurch erreicht werden, dass die Werkzeugvorrichtung eine Festlegeanordnung aufweist, welche verstellbar ist zwischen einer Festlegestellung, in welcher die Anlageanordnung in ihrer Dämpfungsendstellung festgelegt ist, und einer Freigabestellung, in welcher die Anlageanordnung zu einer Bewegung aus der Dämpfungsendstellung zur Dämpfungsanfangsstellung hin frei ist.

Vorzugsweise ist die Festlegeanordnung zur Festlegestellung hin vorgespannt, um zu gewährleisten, dass dann, wenn die Anlageanordnung ihre Dämpfungsendstellung erreicht, eine Festlegung ohne weitere Betätigung möglich ist. Die Vorspannung kann im einfachsten Falle durch eine Gewichtskraft der Festlegeanordnung bereitgestellt sein, ist vorteilhafterweise jedoch durch eine Krafteinrichtung, wie etwa eine Federvorspannanordnung, mit definierter Kraft in eine gewünschte Vorspannrichtung vorgespannt, die dann von der Schwerkraftwirkungsrichtung abweichen kann.

Um gewährleisten zu können, dass der Betätigungsstempel eine für die Öffnung der Fliptube geeignete Bewegung ausführt, kann vorgesehen sein, dass die Werkzeugvorrichtung eine längs einer Führungsbahn verlaufende Führungseinrichtung aufweist, welche zur Führung einer Bewegung wenigstens des Betätigungsstempels längs der Führungsbahn vorgesehen und ausgebildet ist.

Da der Betätigungsstempel in der Regel nur auf den Betätigungsabschnitt des Behälterdeckels drücken muss, ist die Führungsbahn vorzugsweise eine geradlinige Führungsachse, welche besonders einfach zu realisieren ist.

Grundsätzlich kann daran gedacht sein, dass die Führungsbahn eine beliebige Bewegung des Betätigungsstempels führt, etwa auch eine Bewegung des Betätigungsstempels in eine Parkstellung nach erfolgter Öffnung der Fliptube. Vorzugsweise verläuft die Führungsbahn jedoch in Richtung einer Betätigungsbewegung des Betätigungsstempels, so dass die Führungseinrichtung eine Betätigungsbewegung des Betätigungsstempels führen kann.

Beispielsweise aus Gründen einer gewünschten Vermeidung von Kraftspitzen am Beginn der Betätigungsaktion des Betätigungsstempels kann vorgesehen sein, dass der Betätigungsstempel relativ zu einem Werkzeugrahmen beweglich an diesem aufgenommen ist. So kann der Betätigungsstempel bei Beginn der Betätigungsaktion im Werkzeugrahmen eine Kraftspitzen abbauende Bewegung ausführen. Weiterhin können an dem Werkzeugrahmen Eingriffsausbildungen vorgesehen sein, welche erst nach einer bestimmten Zeit nach Beginn der Betätigungsaktion des Betätigungsstempels in Eingriff gelangen sollen. Auch dies kann durch die beschriebene Relativbeweglichkeit des Betätigungsstempels relativ zum Werkzeugrahmen erreicht werden, so dass zunächst nur der Betätigungsstempel in Betätigungsangriff an den Betätigungsabschnitt des Behälterdeckels gelangt und erst dann, wenn der Relativbewegungsweg zwischen Betätigungsstempel und Werkzeugrahmen ausgeschöpft ist, auch weitere, am Werkzeugrahmen vorgesehene Eingriffsausbildungen in Eingriff mit Gegenausbildungen, etwa an der Fliptube oder an einer Fliptube-Halterung gelangen können.

Vorzugsweise verläuft die Relativbewegung des Bewegungsstempels relativ zum Werkzeugrahmen längs der durch die Führungseinrichtung bestimmten Führungsbahn.

Um eine Kraftausübung des Betätigungsstempels auf den Betätigungsabschnitt schon während seiner Relativbewegung relativ zum Werkzeugrahmen zu ermöglichen, kann vorgesehen sein, dass der Betätigungsstempel kraftübertragungsmäßig mit einer Kraftvorrichtung derart gekoppelt ist, dass der Betätigungsstempel zumindest in einer Relativbewegungsrichtung nur gegen eine Kraft der Kraftvorrichtung relativ zum Werkzeugrahmen beweglich ist.

Dann, wenn die Kraftvorrichtung eine Federvorrichtung ist, kann eine vom Betätigungsstempel auf den Betätigungsabschnitt ausgeübte Kraft sanft, d.h. anwachsend eingeleitet werden.

Darüber hinaus können die zuvor genannten Kraftwirkungsanordnungen wie Kraftgerät, Krafteinrichtung oder/und Kraftvorrichtung auch für eine vorteilhafte selbsttätige Rückstellung der mit ihnen zusammenwirkenden Anordnung in eine für den Betrieb der Werkzeugvorrichtung vorteilhafte Ausgangsstellung der jeweiligen Anordnung sorgen.

Vorzugsweise ist die Dämpfungseinrichtung an dem Werkzeugrahmen vorgesehen, so dass der Betätigungsstempel nicht nur relativ zum Werkzeugrahmen, sondern ebenso relativ zur Dämpfungseinrichtung beweglich ist. Dadurch können beispielsweise Teile des Betätigungsstempels oder fest mit diesem verbundene Bauteile zur Bildung der oben genannten Festlegeanordnung beitragen.

Dann, wenn die Dämpfungseinrichtung am Werkzeugrahmen vorgesehen ist, kann der Werkzeugrahmen für die Anlageanordnung als Lager dienen, so dass die Anlageanordnung beweglich mit dem Werkzeugrahmen verbunden sein kann. In diesem Falle kann das auf die Anlageanordnung einwirkende Reaktionsmoment des Dämpfungsmoments am Werkzeugrahmen abgestützt sein.

Ebenso kann das Kraftgerät stabil kraftabstützend mit dem Werkzeugrahmen gekoppelt sein.

Weiterhin kann auch wenigstens ein Getriebeteil des Getriebes am Werkzeugrahmen aufgenommen sein, so dass auch die über das Getriebe geleiteten Kräfte am Werkzeugrahmen stabil abgeleitet werden können. Besonders bevorzugt handelt es sich bei dem am Werkzeugrahmen aufgenommenen Getriebeteil um einen Lenker eines Kniegelenkgestänges.

Dann, wenn die Anlageanordnung aus den oben genannten Gründen vorteilhafterweise am Werkzeugrahmen angelenkt ist, kann dieser mit einer vorteilhaft niedrigen Anzahl an Bauteilen in seiner Dämpfungsendstellung festgelegt werden, wenn wenigstens ein Festlegeteil der Festlegeanordnung zur gemeinsamen Bewegung mit dem Betätigungsstempel an diesem vorgesehen ist. Dabei kann das Festlegeteil, etwa zur Vermeidung von Kraftspitzen, wiederum eine gewisse Relativbeweglichkeit zum Betätigungsstempel aufweisen, wenngleich eine starre Verbindung zwischen dem Festlegeteil und dem Betätigungsstempel bevorzugt ist, so dass das Festlegeteil die Bewegung des Betätigungsstempels mitmacht. Dann nämlich, wenn der Betätigungsstempel, wie zuvor dargelegt, mit einer Kraftvorrichtung gekoppelt ist, kann eine durch die Kraftvorrichtung bewirkte Vorspannung des Betätigungsstempels zur überwindbaren oder nicht überwindbaren Verrastbarkeit der Anlageanordnung am Festlegeteil genutzt werden.

Um für den Behälterdeckel eine definierte und reproduzierbar erreichbare Öffnungsstellung bereitstellen zu können, kann überdies vorgesehen sein, dass die Werkzeugvorrichtung eine Deckelanlagefläche aufweist, welche zur Anlage an den Behälterdeckel ausgebildet ist, wenn diese sich in seiner Öffnungsstellung befindet. Durch diese Deckelanlagefläche kann außerdem eine unerwünschte selbsttätige Schließbewegung des Behälterdeckels aus der erreichten Öffnungsstellung heraus vermieden oder zumindest erschwert werden, solange ein Abschnitt des Behälterdeckels daran anliegt.

Da der Betätigungsstempel ohnehin zur Betätigung des Betätigungsabschnitts ausgebildet ist und sich daher betriebsmäßig sehr nah am Behälterdeckel befindet, ist die Deckelanlagefläche vorzugsweise am Betätigungsstempel ausgebildet, wenngleich dies nicht zwingend notwendig ist.

Zur gezielten Verlagerung des Betätigungsabschnitts kann der Betätigungsstempel eine Betätigungsfläche aufweisen, welche zum Anlageeingriff mit dem Betätigungsabschnitt ausgebildet ist.

Konstruktiv besonders einfach, jedoch in der Anlagewirkung sehr effektiv, können die Betätigungsfläche und die Deckelanlagefläche einen Winkel einschließen, so dass zunächst der Betätigungsstempel mit der Betätigungsfläche auf den Betätigungsabschnitt drücken und diesen so verlagern kann, wodurch der Deckelabschnitt um die Deckelschwenkachse schwenkt, bis er schließlich an der Deckelanlagefläche des Betätigungsstempels zur Anlage kommt. Um eine möglichst gute Zugänglichkeit der Behälteröffnung der geöffneten Fliptube zu erreichen, sollten Betätigungsfläche und Deckelanlagefläche bevorzugt einen rechten Winkel einschließen.

Die zuvor genannte Führungseinrichtung kann eine Führungsgeometrie aufweisen, welche zum Führungseingriff mit einer an der Behälterbaugruppe vorgesehenen Führungsgegengeometrie ausgebildet ist. Dadurch kann während einer Relativbewegung des Betätigungsstempels relativ zur Behälterbaugruppe eine gewünschte Relativpositionierung von Betätigungsstempel und Behälterbaugruppe gewährleistet werden, etwa dergestalt, dass der Betätigungsstempel, insbesondere mit seiner Betätigungsfläche zur Ausübung des Öffnungsmoments, in Eingriff mit dem Betätigungsabschnitt des Behälterdeckels gelangt und bleibt.

Dabei kann eine Geometrie aus Führungsgeometrie und Führungsgegengeometrie einen längs der Führungsbahn verlaufenden Vorsprung und die jeweils andere Geometrie eine zum Vorsprung korrespondierende Ausnehmung aufweisen.

Da der Betätigungsabschnitt des Behälterdeckels in seiner axialen Richtung längs der Deckelschwenkachse üblicherweise eine für eine Betätigung ausreichende Länge aufweist, jedoch der Betätigungsabschnitt in radialer Richtung von der Deckelschwenkachse weg kurz ausgebildet ist und überdies mit fortschreitendem Öffnen der Fliptube seine Neigung verändert, ist es bevorzugt, dass die Führungsgeometrie und Führungsgegengeometrie wenigstens einen definierten radialen Abstand des Betätigungsstempels von der Deckelschwenkachse sicherstellen.

Zwar kann daran gedacht sein, dass Führungsgeometrie und Führungsgegengeometrie auch für eine Lagefixierung des Betätigungsstempels in axialer Richtung der Deckelschwenkachse während der Betätigung des Betätigungsabschnitts durch den Betätigungsstempel sorgen, jedoch ist diese weniger bevorzugt, da üblicherweise in einer Behälterbaugruppe mehrere Fliptubes in Richtung der Deckelschwenkachse mit Abstand voneinander angeordnet sind, so dass eine gewisse Bewegbarkeit des Betätigungsstempels in Richtung der Deckelschwenkachse zur schnelleren Abfolge einer Betätigung axial benachbarter Fliptubes sogar gewünscht sein kann.

In der Regel weist die Behälterbaugruppe eine oder mehrere Fliptubes auf, welche in einer gesondert von der wenigsten einen Fliptube ausgebildeten Fliptube-Halterung aufgenommen sind. Dies erleichtert das Wechseln einzelner Fliptubes. Dann ist es jedoch aus Gründen des in der Regel steiferen Materials der Fliptube-Halterung vorteilhaft, die Führungsgegengeometrie in der Fliptube-Halterung auszubilden, was die Führungseigenschaften der Führungseinrichtung verbessert.

Damit sichergestellt werden kann, dass der Behälterdeckel auch nach Entfernen der Werkzeugvorrichtung von einem gerade in seine Öffnungsstellung verschwenkten Behälterdeckel in der Öffnungsstellung verbleibt, kann vorgesehen sein, dass die Baugruppe eine Rasteinrichtung aufweist, welche den Behälterdeckel in der Öffnungsstellung fixiert. Eine vorteilhafte Fixierung bildet die oben bereits genannte Verrastung, wobei man dann mit besonders wenig bewegten Teilen auskommt, wenn die Verrastung überwindbar ausgestaltet, insbesondere aufgrund von Materialelastizitäten überwindbar ausgestaltet ist.

Dabei ist es bevorzugt, wenn die Rasteinrichtung an der Behälterbaugruppe und dort wiederum besonders bevorzugt an der gesondert von der wenigstens einen Fliptube ausgebildeten Fliptube-Halterung ausgebildet ist, da die Fliptube-Halterung in der Regel verglichen mit der Fliptube selbst das steifere und damit zur Verrastung geeignetere Bauteil ist.

Konstruktiv kann die zuvor genannte, aufgrund von Materialelastizitäten überwindbar ausgestaltete Verrastung der Rasteinrichtung dadurch realisiert sein, dass die Rasteinrichtung einen Rastvorsprung umfasst, welcher in den Bewegungsbereich des Betätigungsabschnitts des Behälterdeckels derart hineinragt, dass er aufgrund einer Elastizität des Behälterdeckels, insbesondere des Betätigungsabschnitts, oder/und des Rastvorsprungs, vom Behälterdeckel bei seiner Bewegung zwischen Öffnungsstellung und Schließstellung überwindbar ist.

Ebenso kann es wünschenswert sein, dass die Anlageanordnung, insbesondere dann, wenn sie um eine Anlageschwenkachse verschwenkbar ausgebildet ist, definiert in ihre Dämpfungsendstellung bewegt wird. Damit kann sichergestellt werden, dass die Anlageanordnung ihre Dämpfungsendstellung auch erreicht. Konstruktiv kann dies in einfacher Weise dadurch erreicht werden, dass die Anlageanordnung eine Endstellungsgeometrie aufweist, welche zum führenden Eingriff mit einer Endstellungsgegengeometrie der Behälterbaugruppe ausgebildet ist. Beispielsweise können die Endstellungsgeometrie und die Endstellungsgegengeometrie durch entsprechende Schrägflächen oder gewölbte Flächen gebildet sein, auf welchen die Endstellungsgeometrie und die Endstellungsgegengeometrie aneinander unter Bildung einer Zwangsführung gleiten.

Aus den oben genannten Gründen ist die Endstellungsgegengeometrie der Behälterbaugruppe besonders bevorzugt an einer gesondert von der wenigstens eine Fliptube ausgebildeten Fliptube-Halterung vorgesehen.

Die Bearbeitung der an der Baugruppe vorteilhafterweise vorgesehenen Gegengeometrien kann dadurch erleichtert werden, dass die Endstellungsgegengeometrie und die Führungsgegengeometrie einander unmittelbar benachbart angeordnet sind, vorzugsweise längs der Führungsbahn aufeinander folgend, so dass die Führungsgegengeometrie und die Endstellungsgegengeometrie vorteilhafterweise bei spanender Bearbeitung mit ein und demselben Werkzeug in einer einzigen Aufspannung erzeugt werden können oder bei urformender Erzeugung eine Baugruppe mit möglichst geringem Bauraumbedarf bei gleichzeitiger Gewährleistung der oben genannten Führungsaufgaben bereitgestellt werden kann.

Die vorliegende Erfindung wird nachfolgend anhand der beiliegenden Figuren näher erläutert werden. Es stellt dar:
- Figur 1:: eine perspektivische Darstellung einer erfindungsge-mäßen Ausführungsform einer Baugruppe aus einer Werkzeugvorrichtung und einer Behälterbaugruppe mit wenigstens einer Fliptube und einer Fliptube-Halterung,
- Figur 2a:: die Baugruppe von Figur 1 in Seitenansicht mit Blick-richtung längs der Deckelschwenkachse,
- Figur 2b:: die Werkzeugvorrichtung von Figur 2a unter Weglassung von Teilen des Werkzeugrahmens,
- Figuren 3a bis 9b:: die Baugruppe bzw. Werkzeugvorrichtung der Figuren 2a und 2b in zunehmend weiter fortgeschrittenen Pro-zesssituationen des Öffnens und des Schließens einer Fliptube mittels der Werkzeugvorrichtung.

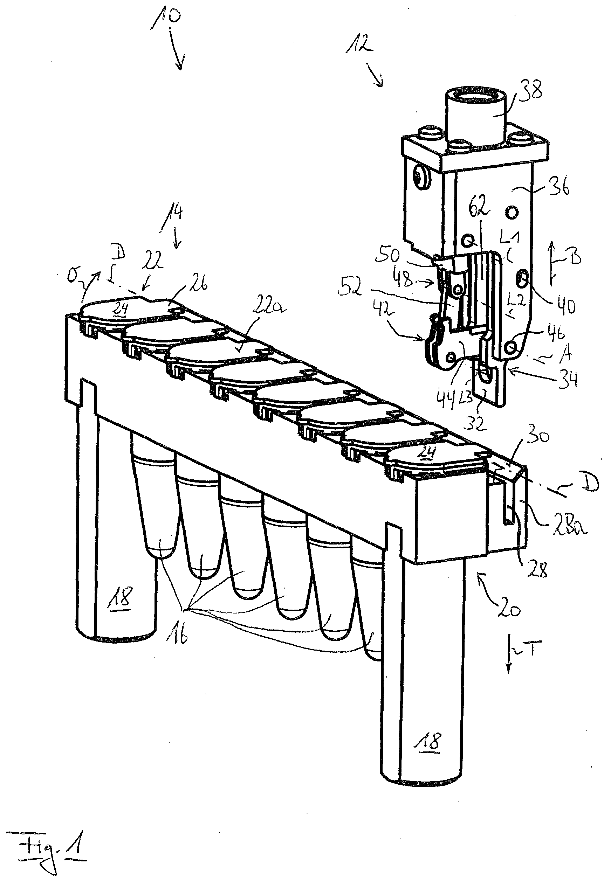

In Figur 1 ist eine allgemein mit 10 bezeichnete Baugruppe perspektivisch dargestellt, welche eine erfindungsgemäße Ausführungsform einer Werkzeugvorrichtung 12 sowie eine Behälterbaugruppe 14 mit acht identischen Fliptubes 16, von welchen die äußersten beiden in Beinen 18 einer gesondert von den Fliptubes 16 ausgebildeten Halterung 20 aufgenommen sind. Die Fliptubes 16 weisen einen Behälterdeckel 22 auf, welcher um eine Deckelschwenkachse D aus der in Figur 1 gezeigten Schließstellung in Richtung des Pfeils O zu einer Öffnungsstellung hin verschwenkbar ist. Die Fliptubes 16 der Halterung 20 von Figur 1 sind derart angeordnet, dass ihre Deckelschwenkachsen D koaxial angeordnet sind.

Jeder Behälterdeckel 22 weist einen Deckelabschnitt 24 auf, welcher von der Deckelschwenkachse D aus betrachtet auf einer Seite dieser Achse gelegen ist, und weist einen Betätigungsabschnitt 26 auf, welcher vorzugsweise starr mit dem Deckelabschnitt 24 zur gemeinsamen Bewegung mit diesem verbunden ist, und welcher bezüglich der Deckelschwenkachse D auf der dem Deckelabschnitt 24 gegenüberliegenden Seite gelegen ist.

Vorzugsweise bilden Deckelabschnitt 24 und Betätigungsabschnitt 26 eine gemeinsame nach außen weisende ebene Deckelfläche 22a.

Vorzugsweise weist die Halterung 20 eine Führungsnut 28 auf, welche eine Führungsgegengeometrie im Sinne der vorhergehenden Beschreibungseinleitung darstellt. Bevorzugt verläuft die Führungsnut 28 parallel zur Deckelschwenkachse D durchgehend an allen Fliptubes 16 vorbei.

Am Spalteintrittsende der Führungsnut 28 weist ein die Führungsnut begrenzender Schenkel 28a eine bezüglich der zur Deckelschwenkachse D orthogonalen Führungsnut-Tiefenrichtung T geneigte Schrägfläche 30, welche zum einen vorteilhafterweise als Einführschräge für einen Führungsvorsprung 32 eines Betätigungsstempels 34 der Werkzeugvorrichtung 12 dienen kann, welche jedoch auch, wie weiter unten ausgeführt werden wird, als Endstellungsgegengeometrie im Sinne der vorhergehenden Beschreibungseinleitung dienen kann. Die Werkzeugvorrichtung 12 weist neben dem bereits erwähnten Betätigungsstempel 34 einen den Betätigungsstempel 34 vorzugsweise gabelartig an beiden in Richtung der Deckelschwenkachse D weisenden Seitenflächen umgebenden Werkzeugrahmen 36 auf, welcher mittels einer Kopplungsgeometrie 38 an ein Handhabungsgerät, wie etwa einen Roboter, koppelbar sein kann. Der Betätigungsstempel 34 ist in der in Figur 1 gezeigten bevorzugten Ausführungsform längs der Doppelpfeils B relativ zum Werkzeugrahmen 36 bewegbar, wobei der Doppelpfeil B bei der in Figur 1 gezeigten Anordnung die Führungsnut-Tiefenrichtung T umfasst.

Ein weiter unten noch näher erläutertes Langloch 40 im Werkzeugrahmen 36 deutet den Relativbewegungshub des Betätigungsstempels 34 relativ zum Werkzeugrahmen 36 an.

Wie man in Figur 1 ebenfalls erkennt, kann der Werkzeugrahmen 36 aus mehreren Bauteilen gebaut sein.

Die Werkzeugvorrichtung 12 umfasst weiter eine Dämpfungseinrichtung 42 mit einer um die Anlageschwenkachse A schwenkbaren Anlageanordnung 44.

Vorzugsweise ist die Anlageanordnung 44 über einen Schwenkzapfen 46, dessen Mittelachse die Anlageschwenkachse A bildet, schwenkbar am Werkzeugrahmen 36 angelängt.

Die Anlageanordnung 44 kann überdies mit einem Getriebe 48, welches vorzugsweise als Kniegelenkgestänge ausgebildet ist, mit dem Werkzeugrahmen 36 verbunden sein.

Dabei ist vorteilhafterweise ein erster Lenker 50 um eine erste Lenkerachse L1 schwenkbar am Werkzeugrahmen angelenkt, und ein zweiter Lenker 52 ist vorteilhafterweise um eine zweite Lenkerachse L2 schwenkbar am ersten Lenker und um eine dritte Lenkachse L3 schwenkbar an der Anlageanordnung angelenkt. Die Lenkerachsen L1, L2 und L3 sind zueinander parallel und sind vorzugsweise auch zur Anlageschwenkachse A parallel.

Vorzugsweise ist der erste Lenker 50 durch eine in Figur 1 nicht dargestellte Vorspanneinrichtung in die in Figur 1 gezeigte Stellung vorgespannt, so dass mittels dieser Vorspannung vorzugsweise auch die Anlageanordnung 44 in die in Figur 1 gezeigte Dämpfungsanfangsstellung vorgespannt ist.

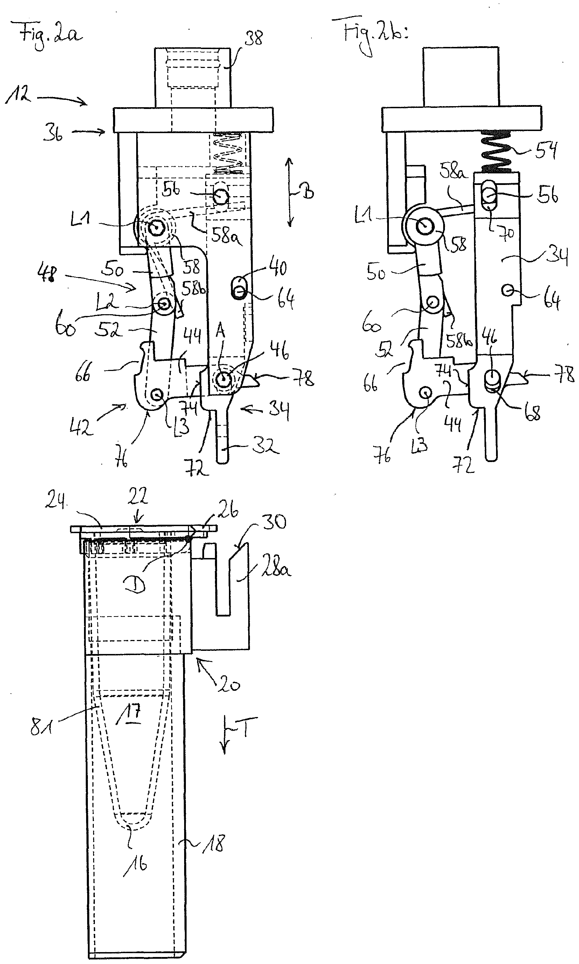

In Figur 2a ist die Baugruppe 10 von Figur 1 vergrößert in der Seitenansicht dargestellt. Figur 2b zeigt die Werkzeugvorrichtung 12 von Figur 2a unter Weglassung von Teilen des Werkzeugrahmens 36.

Wie bereits dargelegt wurde, ist in der Anordnung der Figuren 1 und 2a eine zu öffnende Fliptube 16 von einem in seiner Schließstellung befindlichen Behälterdeckel 22 verschlossen, so dass der Behälterinnenraum 17 der Fliptube 16 nicht zugänglich ist.

Die Dämpfungseinrichtung 42 der Werkzeugvorrichtung 12, genauer die Anlageanordnung 44, befindet sich in ihrer Dämpfungsanfangsstellung, welche eine Ausgangsstellung für einen Öffnungsvorgang der Fliptube 16 durch die Werkzeugvorrichtung 12 ist.

Der Betätigungsstempel 34 ist durch eine einenends am Betätigungsstempel 34 und andernends am Werkzeugrahmen 36 abgestützten Betätigungsstempel-Vorspannfeder 54, welche eine Druckfeder ist, in die in den Figur 2a und 2b gezeigte Stellung vorgespannt.

Am Werkzeugrahmen 36 kann ein parallel zum Schwenkzapfen 46 verlaufender Stützzapfen 56 vorgesehen sein, an welchem ein Schenkel 58a einer Anlageanordnung-Vorspannfeder 58 abgestützt sein kann. Ein weiterer Schenkel 58b der Anlageanordnung-Vorspannfeder 58 kann an dem die Lenkerachse L2 definierenden Gelenkzapfen 60 abgestützt sein, wodurch die Anlageanordnung 44 mittelbar über die an dem Getriebe 48 angreifende Anlageanordnung-Vorspannfeder 58 in die in den Figuren 1, 2a und 2b dargestellte Dämpfungsanfangsstellung vorgespannt sein kann.

An dem Betätigungsstempel 34 kann eine den Aufnahmeraum 62 (siehe Figur 1) im Betätigungsstempel 34 zur Aufnahme der Anlageanordnung 44 überspannende Festlegestange 64 vorgesehen sein, welche zur Hubbegrenzung des Relativhubs zwischen Betätigungsstempel 34 und Werkzeugrahmen 36 vorzugsweise in das Langloch 40 im Werkzeugrahmen 36 hineinreichen kann.

Wie weiter unten erläutert werden wird, kann die Anlageanordnung 44 eine Rastvertiefung 66 aufweisen, welche in der Dämpfungsendstellung der Anlageanordnung 44 sich im Eingriffsbereich der Festlegestange 46 am Betätigungsstempel 34 befindet.

Da vorzugsweise die Anlageanordnung 44 über den Schwenkzapfen 46 schwenkbar am Werkzeugrahmen 36 angelenkt ist, während die Festlegestange 64 mit dem Betätigungsstempel 34 relativ zum Werkzeugrahmen 36 längs des Doppelpfeils B verlagerbar ist, ist somit der Abstand zwischen Festlegestange 64 und Schwenkzapfen 46 veränderbar, insbesondere ausgehend von dem in den Figuren 2a und 2b gezeigten Abstand vergrößerbar.

Die Betätigungsstempel-Vorspannfeder 54 kann somit auch als Vorspannfeder der Festlegestange 64 wirken, welche die Festlegestange 64 in die in Figur 2a gezeigte Festlegestellung vorzugsweise überwindbar vorspannt.

Ebenso wie das Langloch 40 im Werkzeugrahmen 36 der Bewegbarkeit des Betätigungsstempels 34 relativ zum Werkzeugrahmen 36 dient, dienen die den Schwenkzapfen 46 und den Stützzapfen 56 umgebenden Langlöcher 68 bzw. 70 (siehe Figur 2b) im Betätigungsstempel 34 dessen Bewegbarkeit längs des Doppelpfeils B.

Zur definierten Betätigung des Betätigungsabschnitts 46 ist am Betätigungsstempel 34 vorzugsweise eine Betätigungsanlagefläche 72 ausgebildet. Dann, wenn der Behälterdeckel 22 in seiner Öffnungsstellung angelangt ist, liegt er vorzugsweise an der Deckelanlagefläche 74 an, welche ebenfalls am Betätigungsstempel 34 ausgebildet sein kann. Besonders bevorzugt gehen Betätigungsfläche 72 und Deckelanlagefläche 74 ineinander über und schlie-ßen einen rechten Winkel ein, wie in den Figuren 2a und 2b zu erkennen ist.

An der Anlageanordnung 44 ist vorzugsweise eine Anlagenase 76 ausgebildet, welche zur gleitenden Anlage an dem Behälterdeckel 22, vorzugsweise am Deckelabschnitt 24, ausgebildet ist.

In dem hier erläuterten Ausführungsbeispiel weist die Anlageanordnung 44 an ihrem der Anlagenase 76 entgegengesetzten Ende eine Endstellungsgeometrie 78 auf, welche die Form einer einfachen Schrägfläche aufweisen kann. Wie weiter unten gezeigt werden wird, kann die Endstellungsgeometrie 78 im Betrieb der Werkzeugvorrichtung 12 bzw. der Baugruppe 10 mit der als Endstellungsgegengeometrie wirkenden Schrägfläche 30 an der Fliptube-Halterung 20 zusammenwirken, etwa durch einen gleitenden Anlageeingriff, um zu gewährleisten, dass die Anlageanordnung 44 zu einem gewünschten Zeitpunkt sicher in ihre Dämpfungsendstellung gelangt.

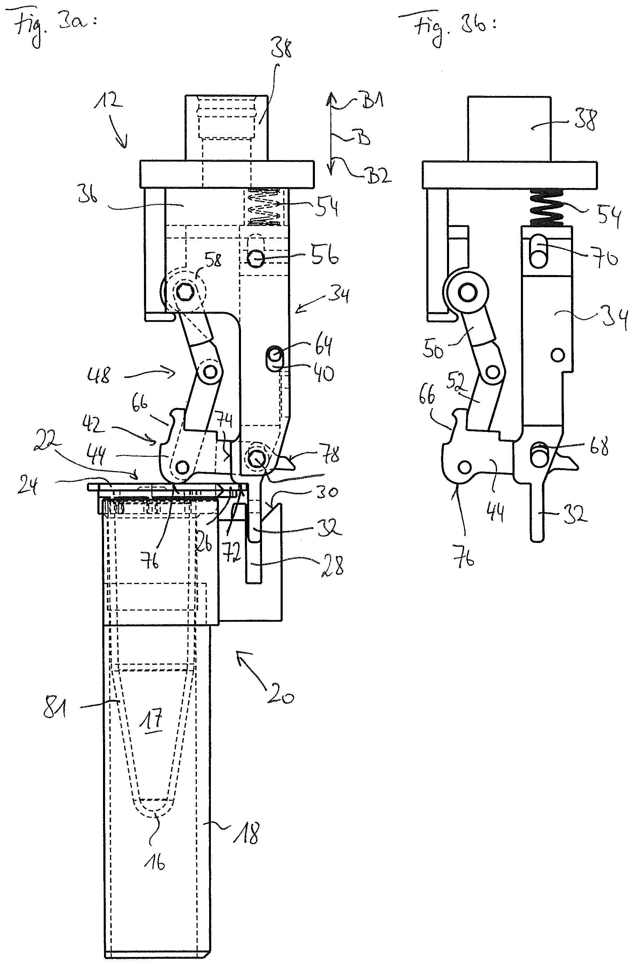

In den Figuren 3a und 3b ist die Baugruppe 10 der Figuren 2a und 2b in einer fortgeschritteneren Stellung beim automatisierten Öffnen der Fliptube 16 dargestellt.

Der Führungsvorsprung 32 ist teilweise in die Führungsnut 28 eingeführt, so dass die Betätigungsfläche 72 am Betätigungsstempel 34 in Anlage an den Betätigungsabschnitt 26 des Betätigungsdeckels 22 gelangt ist.

Dabei wurde der Betätigungsstempel 34 gegen die Kraft der Betätigungsstempel-Vorspannfeder 54 relativ zum Werkzeugrahmen 36 in Richtung des Pfeils B1 bewegt, bis die Festlegestange 64 an dem in Figur 3a oberen Längsende des Langlochs 40 in Anlage gelangt ist.

Gleichzeitig ist die Anlagenase 76 der Anlageanordnung 44 in Anlageeingriff mit dem Deckelabschnitt 24 des Behälterdeckels 22 gelangt und wurde geringfügig aus der Dämpfungsanfangsstellung der Figuren 2a und 2b bei der Betrachtung der Figur 3a im Uhrzeigersinn gegen die Vorspannkraft der Anlageanordnung-Vorspannfeder 58 in Richtung zur Schließstellung hin bewegt.

Die Vorspannkraft der Anlageanordnung-Vorspannfeder 58 sorgt für eine sichere Anlage der Anlageanordnung 44 an dem ihm zugeordneten Anlageabschnitt des Behälterdeckels 22.

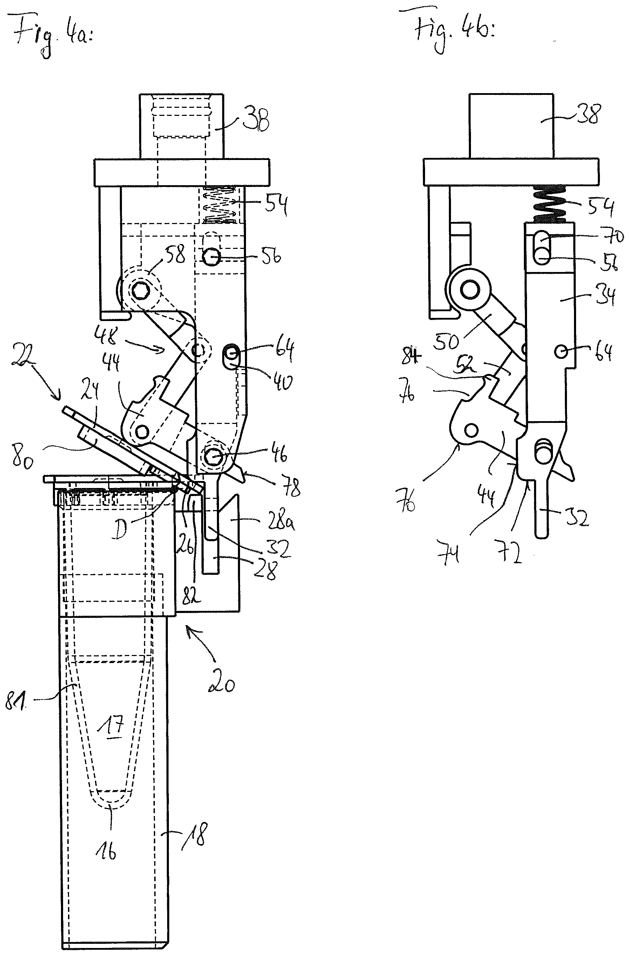

In den Figuren 4a und 4b ist der automatisierte Öffnungsvorgang der Fliptube 16 zu einem noch weiter fortgeschrittenen Stadium dargestellt.

Der Führungsvorsprung 32 ist noch tiefer in die Führungsnut 28 eingetaucht, wodurch von der Betätigungsfläche 72 eine Kraft auf den Betätigungsabschnitt 26 und damit ein Öffnungsmoment auf den Behälterdeckel 22 ausgeübt wird. Aufgrund des ausgeübten Öffnungsmoments wurde eine mit dem Rastkragen 80 an der Innenseite des Deckelabschnitts 24 des Behälterdeckels 22 mit dem Behältergrundkörper 81 der Fliptube 16 in der Schließstellung des Behälterdeckels hergestellte Verrastung überwunden.

Durch die Öffnung des Behälterdeckels 22 durch Verschwenken desselben um die Deckelschwenkachse D wurde die Anlageanordnung 44 noch weiter gegen die Vorspannkraft der Anlageanordnung 58 bei Betrachtung der Figuren 4a und 4b im Uhrzeigersinn von der ursprünglichen Dämpfungsanfangsstellung weg zur Dämpfungsendstellung hin verschwenkt.

Aufgrund der Federcharakteristik der Anlageanordnung-Vorspannfeder 58 sowie weiter aufgrund der geometrischen Verhältnisse des als Kniegelenkgestänge ausgeführten Getriebes 48 ändert sich die von der Anlageanordnung 44 auf den Deckelabschnitt 24 in Schließrichtung ausgeübte Kraft mit der Winkelstellung der Anlageanordnung 44 relativ zum Werkzeugrahmen 36, wodurch sich auch das von der Anlageanordnung 44 auf den Deckelabschnitt 26 ausgeübte und in Schließrichtung wirkende Dämpfungsmoment mit der Winkelstellung der Anlageanordnung 44 relativ zum Werkzeugrahmen 36 ändert.

In Figur 4a ist außerdem zu erkennen, wie der elastisch verformbare Betätigungsabschnitt 26 des Behälterdeckels 22 mit seinem freien Längsende an einen Rastvorsprung 82 an der Fliptube-Halterung 20 in Anlage gelangt. Aufgrund der vorhandenen Materialelastizitäten des Betätigungsabschnitts 26 oder/und des Rastvorsprungs 82 kann der Betätigungsabschnitt 26 an dem Rastvorsprung 82 vorbei zur Öffnungsstellung des Behälterdeckels 22 hin verschwenkt werden.

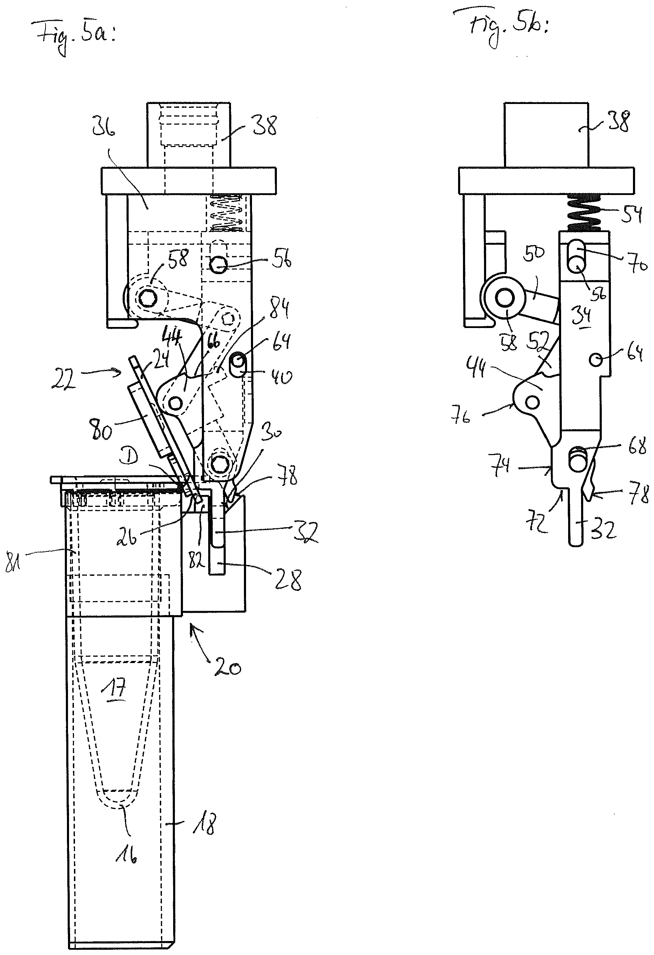

In den Figuren 5a und 5b ist der Zeitpunkt der Überwindung des Rastvorsprungs 82 durch den Betätigungsabschnitt 26 dargestellt. Die dafür erforderliche Kraft wird vom Betätigungsstempel 34, genauer von der Betätigungsfläche 72 aufgebracht, welche auch einen gekrümmten Flächenabschnitt aufweisen kann. Die Anlageanordnung 44 liegt weiterhin am Deckelabschnitt 24 des Behälterdeckels 22 an und übt ein in Schließrichtung wirkendes Dämpfungsmoment auf den Behälterdeckel 22 aus, welches jedoch betragsmäßig geringer ist als das durch den Betätigungsstempel 34 auf den Betätigungsabschnitt 26 ausgeübte Öffnungsmoment.

Außerdem ist in Figur 5a zu erkennen, dass die Endstellungsgeometrie 78 der Anlageanordnung 44 bei geringfügigem weiteren Fortschritt der Öffnungsbewegung in Gleitanlage mit der Endstellungsgegengeometrie 30 an der Fliptube-Halterung 20 gelangt.

Aufgrund der Relativstellung von Betätigungsstempel 34 und Werkzeugrahmen 36 und der dadurch bedingten Anordnung der Festlegestange 64 kann eine die Rastvertiefung 66 der Anlageanordnung 44 begrenzende Endnase 84 in Figur 5a unter der Festlegestange 64 hindurch im Uhrzeigersinn verschwenkt werden, so dass sich die Festlegestange 64 schließlich im Bereich der Rastvertiefung 66 befindet.

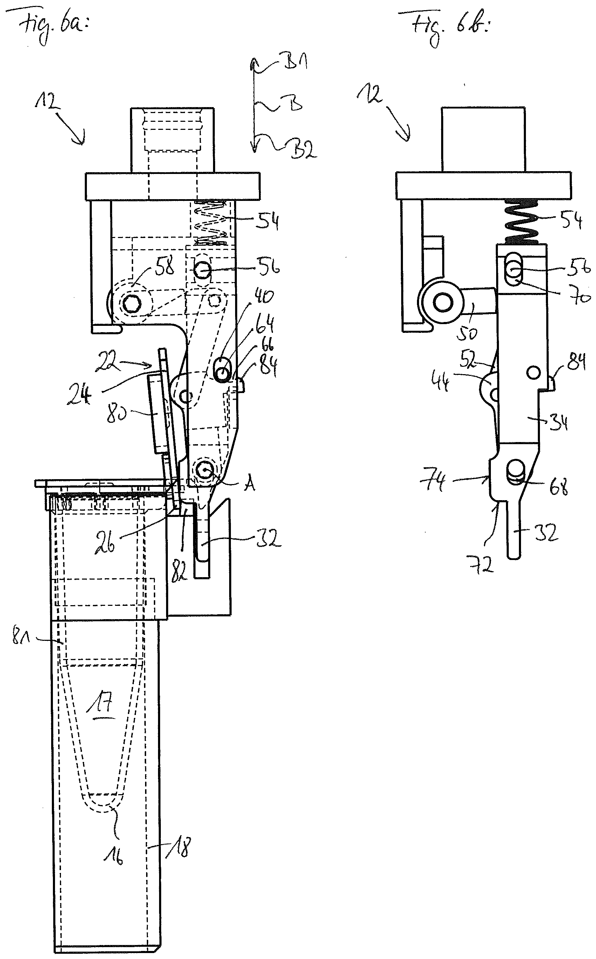

Diese Stellung ist in den Figuren 6a und 6b dargestellt.

In Figur 6a ist der Behälterdeckel 22 in seiner Öffnungsstellung angelangt und liegt mit einem Abschnitt an der Deckelanlagefläche 74 des Betätigungsstempels 34 an.

Außerdem hat der Betätigungsabschnitt 26 den Rastvorsprung 82 überwunden, so dass der Behälterdeckel 22 auch durch den Rastformschluss des Betätigungsabschnitts 26 mit dem Rastvorsprung 82 in seiner Öffnungsstellung gehalten wird, solange kein diesen Rastvorsprung überwindendes Schließmoment auf den Behälterdeckel 22 ausgeübt wird.

Da der Behälterdeckel 22 seine Öffnungsstellung erreicht hat, vermag der Betätigungabschnitt 26 keine der Federkraft der Betätigungsstempel-Vorspannfeder 54 entgegengesetzte Kraft entgegenzustellen, so dass es zu einer Relativbewegung des Betätigungsstempels 34 relativ zum Werkzeugrahmen 36 in Richtung des Pfeils B2 kommt, und zwar getrieben durch die Kraft der Betätigungsstempel-Vorspannfeder 54.

Dadurch taucht die Festlegestange 64 in die Rastvertiefung 66 der Anlageanordnung 44 ein, die sich mittlerweile in der Dämpfungsendstellung befindet, in welcher die Rastvertiefung 66 zum Formschlusseingriff mit der Festlegestange 64 angeordnet ist. Durch die Vorspannkraft der Betätigungsstempel-Vorspannfeder 54 wird also die Anlageanordnung 44 mittels der in ihre Festlegestellung vorgespannte Festlegestange 64 formschlüssig in der Dämpfungsendstellung gehalten.

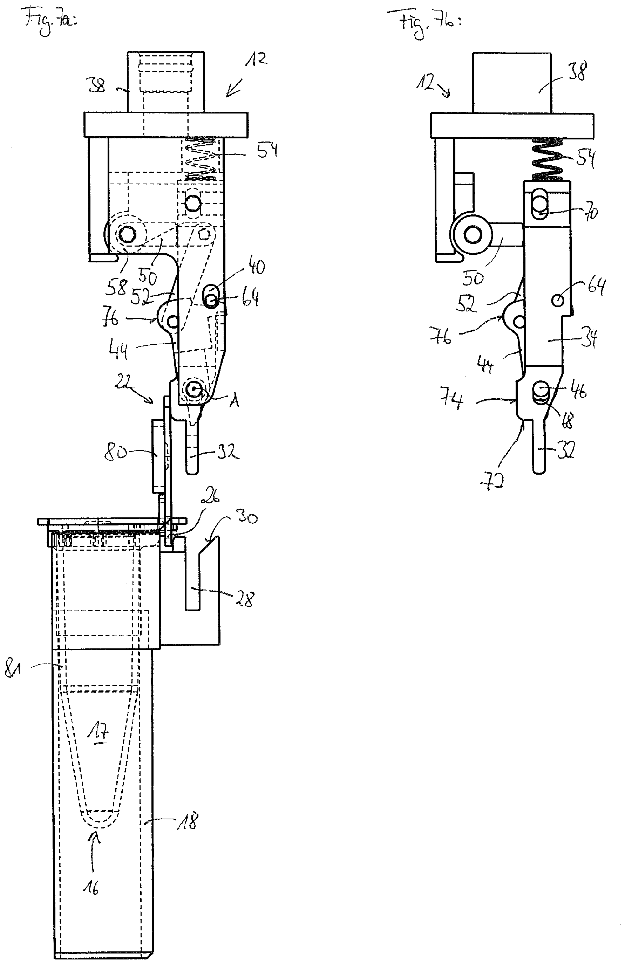

Die Figuren 7a und 7b zeigen, wie die Werkzeugvorrichtung 12 mit dem am Werkzeugrahmen 36 durch die Betätigungsstempel-Vorspannfeder 54 in Richtung des Pfeils B2 vorgespannten Betätigungsstempel 34 - und damit bei gleichzeitiger Vorspannung der Festlegestange 64 in die Festlegestellung - ausgehend von der geöffneten Fliptube 16 in Richtung des Pfeils B1 angehoben werden kann. Dabei kann die Deckelanlagefläche 74 an der im Wesentlichen ebenen Deckelaußenfläche 22a des Behälterdeckels 22 entlang gleiten, da der Behälterdeckel 22 mit dem Betätigungsabschnitt 26 am Rastvorsprung 82 in der erreichten Öffnungsstellung verrastet ist.

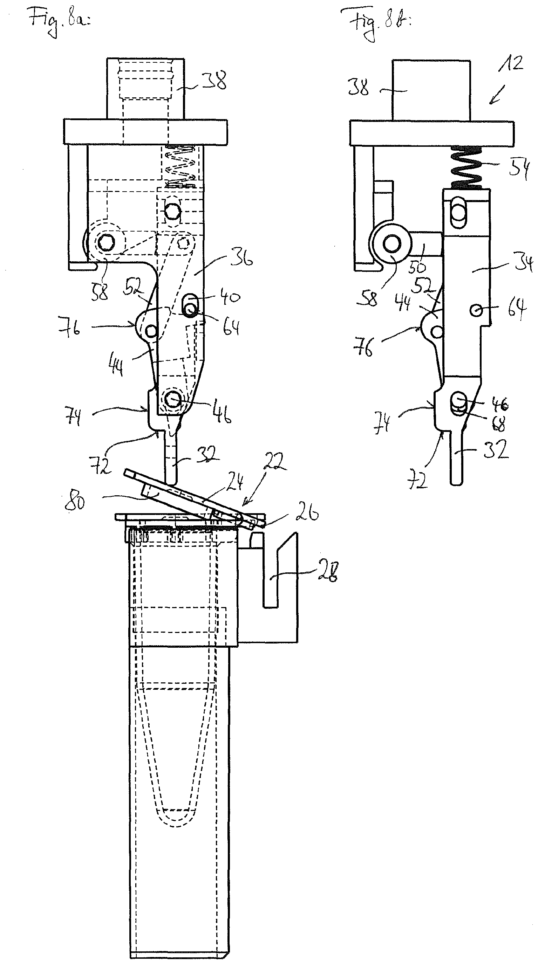

Die Figur 8a zeigt, wie die Werkzeugvorrichtung 12, insbesondere der Betätigungsstempel 34, und daran besonders das freie Längsende des Führungsvorsprungs 32, zum Schließen einer Fliptube 16 herangezogen werden kann.

Dabei kann mit der Werkzeugvorrichtung 12, vorzugsweise über das freie Ende des Führungsvorsprungs 32, ein in Schließrichtung wirkendes Schließmoment auf den Behälterdeckel 22, insbesondere auf dessen Deckelabschnitt 24, ausgeübt werden.

Der Betätigungsabschnitt 26 des Behälterdeckels 22, der Rastvorsprung 82 und die Betätigungsstempel-Vorspannfeder 54 sind dabei hinsichtlich ihrer Elastizität vorzugsweise derart auszulegen, dass mit dem Betätigungsstempel 34 die vom Betätigungsabschnitt 26 und Rastvorsprung 82 gebildete Verrastung des Behälterdeckels 22 in der Öffnungsstellung überwunden werden kann, ohne dass durch die am Betätigungsstempel 34 wirkende Reaktionskraft die Betätigungsstempel-Vorspannfeder 54 zusammengedrückt und somit die Festlegestange 64 unerwünschterweise aus ihrer Festlegestellung in ihre Freigabestellung verstellt werden würde.

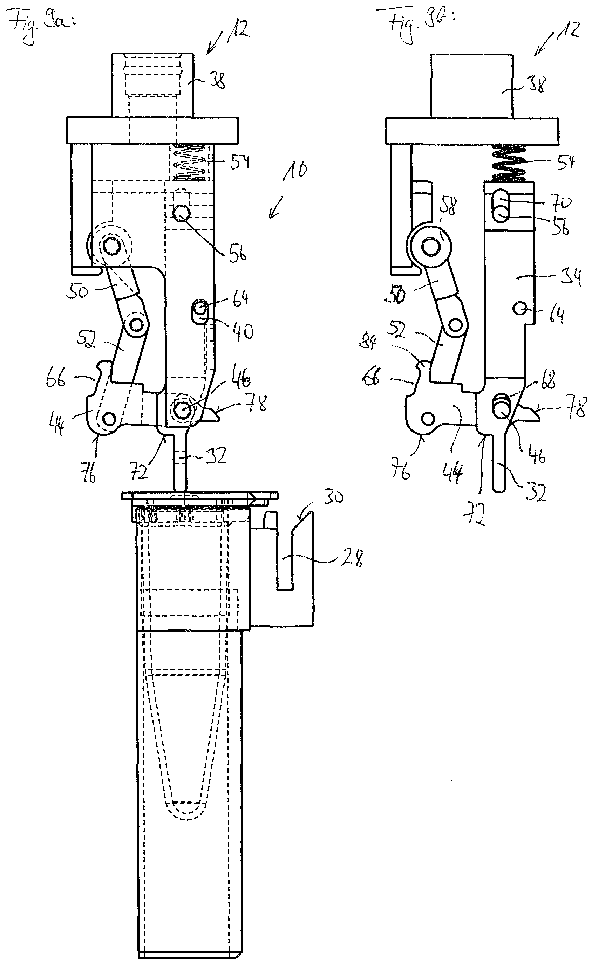

Die Figur 9a zeigt den Zustand der Werkzeugvorrichtung 12 nach Herstellung eines Rastzustandes des Behälterdeckels 22, insbesondere des Rastkragens 80 an dem Deckelabschnitt 24 desselben, mit dem Behältergrundkörper 81 der Fliptube 16. Dann, wenn die Werkzeugvorrichtung 12 vorzugsweise am freien Längsende des Führungsvorsprungs 32 in Richtung des Pfeils B2 auf die Außenfläche 22a des Behälterdeckels 22 drückt, so dass es zu einer Relativbewegung des Betätigungsstempels 34 relativ zum Werkzeugrahmen 36 in Richtung des Pfeils B1 kommt, wird schließlich die Festlegestange 64 aus ihrer durch die Betätigungsstempel-Vorspannfeder 54 vorgespannte Festlegestellung in ihre Freigabestellung verstellt, so dass nicht länger ein Formschlusseingriff der Festlegestange 64 mit der Rastvertiefung 66 an der Anlageanordnung 44 besteht. In der Folge wird die Anlageanordnung 44 durch die Vorspannkraft der Anlageanordnung-Vorspannfeder 58 über das Getriebe 48 in ihre Dämpfungsanfangsstellung verstellt, so dass die Werkzeugvorrichtung 12 in den Figuren 9a und 9b den in Wesentlichen selben Systemzustand wie in den Figuren 2a und 2b einnimmt und für einen erneuten Öffnungsvorgang einer Fliptube bereit ist.

## Patentansprüche

1. Baugruppe (10) aus einer Werkzeugvorrichtung (12) und aus wenigstens einer Behälterbaugruppe (14), welche wenigstens eine Fliptube (16) umfasst, wobei die Werkzeugvorrichtung (12) zum automatisierten Öffnen der wenigstens einen Fliptube (16) ausgebildet ist, das heißt eines Behälters mit einem durch eine Behälteröffnung zugänglichen Behälterinnenraum (17), wobei die Behälteröffnung durch einen Behälterdeckel (22) wahlweise verschließbar ist, der zwischen einer Öffnungsstellung, in welcher der Behälterinnenraum (17) durch die Behälteröffnung zugänglich ist, und einer Schließstellung, in welcher die Behälteröffnung durch den Behälterdeckel (22) verschlossen ist, um eine Deckelschwenkachse (D) verschwenkbar ist, wobei der Behälterdeckel (22) auf einer Seite der Deckelschwenkachse (D) einen die Behälteröffnung wahlweise freigebenden oder verschließenden Deckelabschnitt (24) und auf der jeweils anderen Seite der Deckelschwenkachse (D) einen zur gemeinsamen Bewegung mit dem Deckelabschnitt (24) verbundenen Betätigungsabschnitt (26) aufweist, dessen Betätigung in einer Öffnungsrichtung (O) eine Verschwenkung des Deckelabschnitts (24) von einer der Schließstellung näheren Position, vorzugsweise von der Schließstellung selbst, zu einer der Öffnungsstellung näheren Position, vorzugsweise in die Öffnungsstellung selbst, bewirkt,
wobei die Vorrichtung (12) einen Betätigungsstempel (34) aufweist, welcher zur Verlagerung des Betätigungsabschnitts (26) wenigstens in Öffnungsrichtung (O) und dadurch zur Ausübung eines Öffnungsmomentes auf den Deckelabschnitt (24) vorgesehen und ausgebildet ist, **dadurch gekennzeichnet, dass** die Vorrichtung weiter eine Dämpfungseinrichtung (42) aufweist, welche dazu ausgebildet ist, wenigstens während eines Abschnitts der Betätigung des Betätigungsabschnitts (26) durch den Betätigungsstempel (34) ein Dämpfungsmoment auf den Deckelabschnitt (24) auszuüben, das verglichen mit dem Öffnungsmoment betragsmäßig geringer und entgegengesetzt gerichtet ist.

2. Baugruppe nach Anspruch 1,
**dadurch gekennzeichnet, dass** die Dämpfungseinrichtung (42) eine zum Anlageeingriff mit dem Deckelabschnitt (24) ausgebildete Anlageanordnung (44) aufweist, welche verlagerbar ist zwischen einer Dämpfungsanfangsstellung, die einer der Schließstellung näheren Position des Deckelabschnitts (24) zugeordnet ist, und einer Dämpfungsendstellung, die einer der Öffnungsstellung näheren Position des Deckelabschnitts (24) zugeordnet ist.

3. Baugruppe nach Anspruch 2,
**dadurch gekennzeichnet, dass** die Anlageanordnung (44) mit einem Kraftgerät (58), vorzugsweise einer Federeinrichtung (58), derart zusammenwirkt, dass sie zumindest abschnittsweise, vorzugsweise vollständig, gegen eine Kraftwirkung des Kraftgeräts (58) von der Dämpfungsanfangsstellung in die Dämpfungsendstellung verlagerbar ist.

4. Baugruppe nach Anspruch 2 oder 3,
**dadurch gekennzeichnet, dass** die Anlageanordnung (44) um eine Anlageschwenkachse (A) zwischen der Dämpfungsanfangsstellung und der Dämpfungsendstellung verschwenkbar ist.

5. Baugruppe nach Anspruch 4,
**dadurch gekennzeichnet, dass** die Anlageschwenkachse (A) und die Deckelschwenkachse (D) im Wesentlichen parallel sind.

6. Baugruppe nach einem der Ansprüche 3 bis 5, unter Rückbeziehung auf Anspruch 3,
**dadurch gekennzeichnet, dass** die Anlageanordnung (44) mittels eines Getriebes (48), insbesondere Kniegelenkgestänges (48), mit dem Kraftgerät (58) verbunden ist, wobei das Kraftgerät (58) vorzugsweise eine Federeinrichtung (58), insbesondere eine Torsionsfedereinrichtung (58) ist.

7. Baugruppe nach einem der Ansprüche 2 bis 6,
**dadurch gekennzeichnet, dass** die Anlageanordnung (44) wenigstens in ihrer Dämpfungsendstellung festlegbar, vorzugsweise verrastbar, besonders bevorzugt überwindbar verrastbar ist.

8. Baugruppe nach Anspruch 7,
**dadurch gekennzeichnet, dass** sie eine Festlegeanordnung (64) aufweist, welche verstellbar ist zwischen einer Festlegestellung, in welcher die Anlageanordnung (44) in ihrer Dämpfungsendstellung festgelegt ist, und einer Freigabestellung, in welcher die Anlageanordnung (44) zu einer Bewegung aus der Dämpfungsendstellung zur Dämpfungsanfangsstellung hin frei ist, wobei die Festlegeanordnung (64) vorzugsweise zur Festlegestellung hin vorgespannt ist.

9. Baugruppe nach einem der vorhergehenden Ansprüche,
**dadurch gekennzeichnet, dass** sie eine längs einer Führungsbahn (B, T), vorzugsweise Führungsachse, verlaufende Führungseinrichtung (32) aufweist, welche zur Führung einer Bewegung wenigstens des Betätigungsstempels (34) längs der Führungsbahn (B, T) vorgesehen und ausgebildet ist.

10. Baugruppe nach Anspruch 9,
**dadurch gekennzeichnet, dass** die Führungsbahn (B, T) in Richtung einer Betätigungsbewegung des Betätigungsstempels (34) verläuft.

11. Baugruppe nach einem der vorhergehenden Ansprüche,
**dadurch gekennzeichnet, dass** der Betätigungsstempel (34) relativ zu einem Werkzeugrahmen (36) beweglich an diesem aufgenommen ist, wobei vorzugsweise die Relativbewegung des Betätigungsstempels (34) relativ zum Werkzeugrahmen (36) längs der Führungsbahn (B) verläuft.

12. Baugruppe nach Anspruch 11,
**dadurch gekennzeichnet, dass** der Betätigungsstempel (34) kraftübertragungsmäßig mit einer Kraftvorrichtung (54), insbesondere Federvorrichtung (54), derart gekoppelt ist, dass der Betätigungsstempel (34) zumindest in einer Relativbewegungsrichtung (B1) nur gegen eine Kraft der Kraftvorrichtung (54) relativ zum Werkzeugrahmen (36) beweglich ist.

13. Baugruppe nach Anspruch 11 oder 12,
**dadurch gekennzeichnet, dass** die Dämpfungseinrichtung (42) an dem Werkzeugrahmen (36) vorgesehen ist, wobei vorzugsweise die Anlageanordnung (44) beweglich mit dem Werkzeugrahmen (36) verbunden ist und besonders bevorzugt das Kraftgerät (58) mit dem Werkzeugrahmen (36) kraftabstützend gekoppelt ist.

14. Baugruppe nach einem der Ansprüche 11 bis 13, unter Einbeziehung des Anspruchs 6,
**dadurch gekennzeichnet, dass** wenigstens ein Getriebeteil (50) des Getriebes (48), insbesondere des Kniegelenkgestänges (48), am Werkzeugrahmen (36) aufgenommen, vorzugsweise beweglich aufgenommen ist.

15. Baugruppe nach einem vorhergehenden Ansprüche, unter Einbeziehung des Anspruchs 8,
**dadurch gekennzeichnet, dass** wenigstens ein Festlegeteil (64) der Festlegeanordnung (64) zur gemeinsamen Bewegung mit dem Betätigungsstempel (34) an diesem vorgesehen, vorzugsweise an diesem festgelegt ist.

16. Baugruppe nach einem vorhergehenden Ansprüche,
**dadurch gekennzeichnet, dass** die Werkzeugvorrichtung (12), vorzugsweise der Betätigungsstempel (34), eine Deckelanlagefläche (74) aufweist, welche zur Anlage an den Behälterdeckel (22) ausgebildet ist, wenn dieser sich in seiner Öffnungsstellung befindet.

17. Baugruppe nach einem vorhergehenden Ansprüche, insbesondere nach Anspruch 16,
**dadurch gekennzeichnet, dass** der Betätigungsstempel (34) eine Betätigungsfläche (72) aufweist, welche zum Anlageeingriff mit dem Betätigungsabschnitt (26) ausgebildet ist, wobei vorzugsweise die Betätigungsfläche (72) und die Deckelanlagefläche (74) einen Winkel, besonders bevorzugt einen rechten Winkel, einschließen.

18. Baugruppe nach einem der vorhergehenden Ansprüche, unter Einbeziehung der Merkmale des Anspruchs 9,
**dadurch gekennzeichnet, dass** die Führungseinrichtung (32) eine Führungsgeometrie aufweist, welche zum Führungseingriff mit einer an der Behälterbaugruppe (14) vorgesehenen Führungsgegengeometrie (28) ausgebildet ist.

19. Baugruppe nach einem der vorhergehenden Ansprüche,
**dadurch gekennzeichnet, dass** die Behälterbaugruppe (14) eine Fliptube (16) und eine gesondert von dieser ausgebildete Fliptube-Halterung (20) aufweist, wobei die Führungsgegengeometrie (28) vorzugsweise an der Fliptube-Halterung (20) ausgebildet ist.

20. Baugruppe nach einem der vorhergehenden Ansprüche,
**dadurch gekennzeichnet, dass** die Baugruppe (10), vorzugsweise die Behälterbaugruppe (14), besonders bevorzugt eine gesondert von der Fliptube (16) ausgebildete Fliptube-Halterung (20), eine Rasteinrichtung (82) aufweist, welche den Behälterdeckel (22) in der Öffnungsstellung fixiert, vorzugsweise verrastet, besonders bevorzugt überwindbar verrastet.

21. Baugruppe nach Anspruch 20,
**dadurch gekennzeichnet, dass** die Rasteinrichtung (82) einen Rastvorsprung (82) umfasst, welcher in den Bewegungsbereich des Betätigungsabschnitts (26) des Behälterdeckels (22) derart hineinragt, dass er aufgrund einer Elastizität des Behälterdeckels (22), insbesondere des Betätigungsabschnitts (26), oder/und des Rastvorsprungs (82), vom Behälterdeckel (22) bei seiner Bewegung zwischen Öffnungsstellung und Schließstellung überwindbar ist.

22. Baugruppe nach einem der vorhergehenden Ansprüche, unter Einbeziehung der Merkmale des Anspruchs 2,
**dadurch gekennzeichnet, dass** die Anlageanordnung (44) eine Endstellungsgeometrie (78) aufweist, welche zum führenden Eingriff mit einer Endstellungsgegengeometrie (30) der Behälterbaugruppe (14), besonders bevorzugt einer gesondert von der Fliptube (16) ausgebildeten Fliptube-Halterung (20), ausgebildet ist, um das Erreichen der Dämpfungsendstellung der Anlageanordnung (44) zu unterstützen.

23. Baugruppe nach Anspruch 22, unter Einbeziehung des Anspruchs 18,
**dadurch gekennzeichnet, dass** die Endstellungsgegengeometrie (78) und die Führungsgegengeometrie (28) einander unmittelbar benachbart angeordnet sind, vorzugsweise längs der Führungsbahn aufeinander folgend.

## Claims

1. Assembly (10) consisting of a tool device (12) and consisting of at least one container assembly (14) which comprises at least one flip tube (16),
wherein the tool device (12) is configured for the automated opening of the at least one flip tube (16), in other words of one container having an interior (17) accessible through a container opening, wherein the container opening can be selectively closed by a container lid (22) which can be swivelled about a lid swivel axis (D) between an open position in which the container interior (17) is accessible through the container opening, and a closed position in which the container opening is closed by the container lid (22), the container lid (22) having on one side of the lid swivel axis (D) a lid portion (24), which selectively uncovers or closes the container opening, and has on the respective other side of the lid swivel axis (D) an actuating portion (26) joined to the lid portion (24) for joint movement therewith, the actuation of the actuating portion (26) in an open direction (O) causing the lid portion (24) to swivel out of a position being closer to the closed position, preferably out of the closed position itself, to a position being closer to the open position, preferably into the open position itself,
wherein the device (12) comprises an actuating plunger (34) which is provided and configured to move the actuating portion (26) at least in open direction (O) and thereby to exert an opening moment on the lid portion (24),
**characterised in that** the device further comprises a damping means (42) which is configured to exert a damping moment on the lid portion (24), at least during a period of the actuation of the actuating portion (26) by the actuating plunger (34), which damping moment is less in amount and is directed in an opposite direction compared to the opening moment.

2. Assembly according to claim 1,
**characterised in that** the damping means (42) has a contact arrangement (44) which is configured for contact engagement with the lid portion (24) and can be moved between an initial damping position which is associated with a position of the lid portion (24) being closer to the closed position, and an end damping position which is associated with a position of the lid portion (24) being closer to the open position.

3. Assembly according to claim 2,
**characterised in that** the contact arrangement (44) cooperates with a force implement (58), preferably with a spring means (58), such that it can be moved at least in portions, preferably completely, out of the initial damping position into the end damping position against a force effect of the force implement (58).

4. Assembly according to either claim 2 or claim 3,
**characterised in that** the contact arrangement (44) can be swivelled about a contact swivel axis (A) between the initial damping position and the end damping position.

5. Assembly according to claim 4,
**characterised in that** the contact swivel axis (A) and the lid swivel axis (D) are substantially parallel.

6. Assembly according to any of claims 3 to 5, with reference back to claim 3,
**characterised in that** the contact arrangement (44) is connected to the force implement (58) by a transmission (48), in particular by a knee link rod assembly (48), the force implement (58) preferably being a spring means (58), in particular a torsion spring means (58).

7. Assembly according to any of claims 2 to 6,
**characterised in that** the contact arrangement (44) can be fixed, preferably latched, particularly preferably latched in a releasable manner, at least in its end damping position.

8. Assembly according to claim 7,
**characterised in that** it comprises a fixing arrangement (64) which can be moved between a fixing position in which the contact arrangement (44) is fixed in its end damping position, and a releasing position in which the contact arrangement (44) is free for a movement out of the end damping position towards the initial damping position, the fixing arrangement (64) preferably being pre-loaded towards the fixing position.

9. Assembly according to any of the preceding claims,
**characterised in that** it comprises a guide means (32) which runs along a guide path (B, T), preferably along a guide axis, and is provided and configured to guide a movement at least of the actuating plunger (34) along the guide path (B, T).

10. Assembly according to claim 9,
**characterised in that** the guide path (B, T) extends in the direction of an actuating movement of the actuating plunger (34).

11. Assembly according to any of the preceding claims,
**characterised in that** the actuating plunger (34) is accommodated on a tool frame (36) such that it can move relative thereto, the relative movement of the actuating plunger (34) relative to the tool frame (36) preferably extending along the guide path (B).

12. Assembly according to claim 11,
**characterised in that** the actuating plunger (34) is coupled in terms of force transmission with a force device (54), in particular with a spring device (54), such that the actuating plunger (34) can only move against a force of the force device (54) relative to the tool frame (36) at least in one relative movement direction (B1).

13. Assembly according to either claim 11 or claim 12,
**characterised in that** the damping means (42) is provided on the tool frame (36), the contact arrangement (44) preferably being movably connected to the tool frame (36) and particularly preferably the force implement (58) being coupled with the tool frame (36) in a force-supporting manner.

14. Assembly according to any of claims 11 to 13, including claim 6,
**characterised in that** at least one transmission part (50) of the transmission (48), in particular of the knee link rod assembly (48,) is accommodated, preferably movably accommodated on the tool frame (36).

15. Assembly according to any of the preceding claims, including claim 8,
**characterised in that** at least one fixing part (64) of the fixing arrangement (64) is provided, preferably fixed on the actuating plunger (34), such that it moves together with the actuating plunger (34).

16. Assembly according to any of the preceding claims,
**characterised in that** the tool device (12), preferably the actuating plunger (34), has a lid contact surface (74) which is configured to contact the container lid (22) when the container lid (22) is in its open position.

17. Assembly according to any of the preceding claims, in particular according to claim 16,
**characterised in that** the actuating plunger (34) has an actuating surface (72) which is configured for contact engagement with the actuating portion (26), the actuating surface (72) and the lid contact surface (74) preferably enclosing an angle, particularly preferably a right angle.

18. Assembly according to any of the preceding claims, including the features of claim 9,
**characterised in that** the guide means (32) has a guide shape which is configured for guide engagement with a counter guide shape (28) provided on the container assembly (14).

19. Assembly according to any of the preceding claims,
**characterised in that** the container assembly (14) has a flip tube (16) and a flip tube holder (20) configured separately from this flip tube, the counter guide shape (28) preferably being configured on the flip tube holder (20).

20. Assembly according to any of the preceding claims,
**characterised in that** the assembly (10), preferably the container assembly (14), particularly preferably a flip tube holder (20) configured separately from the flip tube (16), has a catch means (82) which fixes, preferably latches and particularly preferably latches in a releasable manner the container lid (22) in the open position.

21. Assembly according to claim 20,
**characterised in that** the catch means (82) comprises a catch projection (82) which projects into the movement region of the actuating portion (26) of the container lid (22) such that it can be overcome by the container lid (22) when it moves between the open position and the closed position, due to a resilience of the container lid (22), in particular of the actuating portion (26) and /or of the catch projection (82).

22. Assembly according to any of the preceding claims, including the features of claim 2,
**characterised in that** the contact arrangement (44) has an end position shape (78) which is configured for guiding engagement with a counter end position shape (30) of the container assembly (14), particularly preferably of a flip tube holder (20) configured separately from the flip tube (16), to support the attainment of the end damping position of the contact arrangement (44).

23. Assembly according to claim 22, including claim 18,
**characterised in that** the counter end position shape (78) and the counter guide shape (28) are arranged directly next to one another, preferably following one another along the guide path.

## Revendications

1. Module (10) d'un dispositif d'outillage (12) et d'au moins un module de récipient (14) comprenant au moins un fliptube (16), le dispositif d'outillage (12) étant adapté pour une ouverture automatique du au moins un fliptube (16), i.e. d'un récipient avec un espace intérieur de récipient (17) accessible par une ouverture de récipient, l'ouverture de récipient pouvant être fermée par un couvercle de récipient (22) qui peut être pivoté autour d'un axe de pivotement de couvercle (D) entre une position d'ouverture où l'espace intérieur du récipient (17) est accessible par l'ouverture de récipient et une position de fermeture, où l'ouverture de couvercle est fermée par le couvercle de récipient (22), le couvercle de récipient (22) comprenant sur un côté de l'axe de pivotement de couvercle (D) une portion de couvercle (24) sélectivement libérant ou fermant l'ouverture de récipient et respectivement sur l'autre côté de l'axe de pivotement de couvercle (D) une section d'actuation (26) connectée pour un mouvement commun avec la portion de couvercle (24), dont l'actuation dans un sens d'ouverture (O) cause un pivotement de la portion de couvercle (24) d'une position plus proche de la position de fermeture, de préférence de la position de fermeture, à une position plus proche de la position d'ouverture, de préférence à la position d'ouverture,
ou le dispositif (12) comprend en outre un dispositif d'amortissement (42) adapté pour appliquer, au moins pendant une partie de l'actuation de la section d'actuation (26) par le piston d'actuation (34), appliquer un moment d'amortissement à la portion de couvercle (24) qui, en comparaison au moment d'ouverture, a une valeur plus petite et opposée.

2. Module selon la revendication 1,
**caractérisé en ce que** le dispositif d'amortissement (42) comprend un arrangement d'appui (44) pour un engagement d'appui avec la portion de couvercle (24) qui peut être déplacé entre une position initiale d'amortissement associée à une position de la portion de couvercle (24) plus proche de la position de fermeture et une position finale d'amortissement associée à une position de la portion de couvercle (24) plus proche de la position d'ouverture.

3. Module selon la revendication 2,
**caractérisé en ce que** l'arrangement d'appui (44) coopère avec un appareil de force (58), de préférence avec un dispositif de ressort (58) de sorte qu'il peut être déplacé au moins partiellement, de préférence entièrement, contre l'effet de force de l'appareil de force (58) de la position initiale d'amortissement à la position finale d'amortissement.

4. Module selon la revendication 2 ou 3,
**caractérisé en ce que** l'arrangement d'appui (44) peut être pivoté autour d'un axe de pivotement d'appui (A) entre la position initiale d'amortissement et la position finale d'amortissement.

5. Module selon la revendication 4,
**caractérisé en ce que** l'axe de pivotement d'appui (A) et l'axe de pivotement de couvercle (D) sont essentiellement parallèles.

6. Module selon une des revendications 3 à 5, se référant à la revendication 3
**caractérisé en ce que** l'arrangement d'appui (44) est connecté à l'appareil de force (58) par une transmission (48), en particulier une tringlerie de genou (48), l'appareil de force (58) étant de préférence un dispositif de ressort (58), en particulier un dispositif de ressort de torsion (58).

7. Module selon une des revendications 2 à 6,
**caractérisé en ce que** l'arrangement d'appui (44) peut être fixé, de préférence encliqueté, de manière particulièrement préférée encliqueté de manière amovible, au moins dans sa position finale d'amortissement.

8. Module selon la revendication 7,
**caractérisé en ce qu'**il comprend un arrangement de fixation (64) qui est réglable entre une position de fixation où l'arrangement d'appui (44) est fixé dans sa position finale d'amortissement, et une position de libération où l'arrangement d'appui (44) est libre pour un mouvement de la position finale d'amortissement à la position initiale d'amortissement, l'arrangement de fixation (64) étant de préférence précontraint envers la position de fixation.

9. Module selon une des revendications précédentes,
**caractérisé en ce qu'**il comprend un dispositif de guidage (32) s'étendant le long d'une voie de guidage (B, T), de préférence d'un axe de guidage, qui est prévu et adapté pour guider un mouvement au moins du piston d'actuation (34) le long de la voie de guidage (B, T).

10. Module selon la revendication 9,
**caractérisé en ce que** la voie de guidage (B, T) s'étend dans le sens d'un mouvement d'actuation du piston d'actuation (34).

11. Module selon une des revendications précédentes,
**caractérisé en ce que** le piston d'actuation (34) est reçu de manière mobile à un cadre d'outil (36) en relation à ce dernier, où de préférence le mouvement relatif du piston d'actuation (34) est relatif au cadre d'outil (36) le long de la voie de guidage (B).

12. Module selon la revendication 11,
**caractérisé en ce que** le piston d'actuation (34) est couplé à un appareil de force (54), en particulier un dispositif de ressort (54) en transférant une force de sorte que le piston d'actuation (34) est mobile au moins dans un sens de mouvement relatif (B1) seulement contre une force de l'appareil de force (54) relatif au cadre d'outil (36).

13. Module selon une des revendications 11 ou 12,
**caractérisé en ce que** le dispositif d'amortissement (42) est prévu au cadre d'outil (36), où de préférence l'arrangement d'appui (44) est connecté de manière mobile au cadre d'outil (36) et où de manière particulièrement préférée l'appareil de force (58) est couplé au cadre d'outil (36) en prenant de l'appui.

14. Module selon une des revendications 11 à 13, considérant la revendication 6
**caractérisé en ce qu'**au moins une partie de transmission (50) de la transmission (48), en particulier de la tringlerie de genou (48) est reçu au cadre d'outil (36), de préférence de manière mobile.

15. Module selon une des revendications précédentes, considérant la revendication 8,
**caractérisé en ce qu'**au moins une part de fixation (64) de l'arrangement de fixation (64) est prévue, de préférence fixée, au piston d'actuation (34) pour un mouvement commun avec ce dernier.

16. Module selon une des revendications précédentes,
**caractérisé en ce que** le dispositif d'outil (12), de préférence le piston d'actuation (34), comprend une surface d'appui de couvercle (74) adaptée pour l'appui contre le couvercle de récipient (22) lorsque ce dernier est dans sa position d'ouverture.

17. Module selon une des revendications précédentes, en particulier selon la revendication 16
**caractérisé en ce que** le piston d'actuation (34) comprend une surface d'actuation (72) adapté pour un engagement d'appui avec la section d'actuation (26), où de préférence la surface d'actuation (72) et la surface d'appui de couvercle (74) renferment un angle, de manière particulièrement préférée un angle droit.

18. Module selon une des revendications précédentes, considérant les caractéristiques de la revendication 9,
**caractérisé en ce que** le dispositif de guidage (32) comprend une géométrie de guidage adaptée pour un engagement de guidage avec une géométrie de guidage (28) prévue au module de récipient (14).

19. Module selon une des revendications précédentes,
**caractérisé en ce que** le module de récipient (14) comprend un fliptube (16) et un support de fliptube (20) séparé, la géométrie de guidage (28) étant de préférence prévue au support de fliptube (20).

20. Module selon une des revendications précédentes,
**caractérisé en ce que** le module (10), de préférence le module de récipient (14), de manière particulièrement préférée un support de fliptube (20) séparé du fliptube (16), comprend un dispositif d'encliquetage (82) fixant, de préférence encliquetant, le couvercle de récipient (22) dans la position d'ouverture.

21. Module selon la revendication 20,
**caractérisé en ce que** le dispositif d'encliquetage (82) comprend une saillie d'encliquetage (82) qui fait saillie dans la zone de mouvement de la section d'actuation (26) du couvercle de récipient (22) de sorte qu'en raison de l'élasticité du couvercle de récipient (22), en particulier de la section d'actuation (26) ou/et de la saillie d'encliquetage (82), elle peut être libérée par le couvercle de récipient (22) lors de son mouvement entre la position d'ouverture et la position de fermeture.

22. Module selon une des revendications précédentes, considérant les caractéristiques de la revendication 2,
**caractérisé en ce que** l'arrangement d'appui (44) comprend une géométrie de position finale (78) adaptée pour un engagement guidant avec une contre-géométrie de position finale (30) du module de récipient (14), de manière particulièrement préférée un support de fliptube (20) formé séparément du fliptube (16), pour supporter la réalisation de la position finale d'amortissement de l'arrangement d'appui (44).

23. Module selon la revendication 22, considérant la revendication 18,
**caractérisé en ce que** la géométrie de position finale (78) et la géométrie de guidage (28) sont arrangées de manière directement adjacente, de préférence se succédant le long de la voie de guidage.
